# EUROPEAN PATENT APPLICATION

(11) **EP 1 773 030 A2**
(43) Date of publication of application: **11.04.2007**
(21) Application number: 06020830.3
(22) Date of filing: 04.10.2006
(51) Int. Cl.: H04M 1/02, E05D 11/10

(54) **Foldable portable terminal with a hinge which allows several angle positions of the two housings**

(30) Priority: 04.10.2005 KR 20060000949
(71) Applicant: Samsung Electronics Co., Ltd., Suwon-si, Gyeonggi-Do (KR)
(72) Inventor: Kim, Jae-Wook c/oSamsung Electronics Co., Ltd., Suwon-si Gyeonggi-do (KR); Lee, Yong-Seok c/oSamsung Electronics Co., Ltd., Suwon-si, Gyeonggi-do (KR)
(74) Representative: Lang, Johannes

(57) **Abstract**

A portable terminal includes a first housing, a second housing adapted to be rotated about a first hinge axis to be folded or unfolded in a direction approaching or moving away from the first housing while facing the first housing, and a hinge apparatus for rotatably coupling the second housing with the first housing. The second housing receives a driving force from the hinge apparatus in a first interval that rotates the second housing in a direction approaching the first housing. The second housing receives a driving force from the hinge apparatus in a second interval that rotates the second housing in a direction moving away from the first housing to a fully opened position without stopping such that the second housing is unfolded from the first housing. The second housing is stopped at least one time within the second interval while being rotated toward the first housing from an open position of the second housing with respect to the first housing. The portable terminal as described above is opened by the same opening operation as that of the general portable terminal, and is opened at an angle between approximately 90 and 120 degrees according to a user's necessity, thereby enabling the user to easily receive a multimedia service, such as a moving picture.

## Description

### BACKGROUND OF THE INVENTION

### Field of the Invention

The present invention relates to a portable terminal. More particularly, the present invention relates to a portable terminal having a hinge apparatus that stops the rotation of housings of the terminal at a predetermined angle while rotatably coupling the housings with each other.

### Description of the Related Art

Generally, a portable terminal refers to a device used to provide wireless communication between users or between a user and a service provider using a mobile communication station or the like. Recently, in addition to voice communication service and short message transmission service, portable terminals provide various types of content, including mobile banking service, TV service, on-line game service and video-on-demand (VOD) service to users.

According to their appearance, portable terminals may be classified into bar-type terminals having a communication circuit and input and output devices (that is, a transmitter unit and a receiver unit) in a single housing; flip-type terminals having a flip cover installed on a bar-type housing; and folder-type terminals having a pair of housings rotatable to be folded on or unfolded from each other, as well as input and output devices distributed on the corresponding housings. Additionally, many attempts have been made to meet the various tastes of users while improving portability and user convenience, including recently released sliding-type terminals, as well as folder-type terminals.

Mobile communication services using such portable terminals have been limited to voice communication service, short message transmission service, and the like. However, recent mobile communication services are increasingly expanding into the transmission of game, music and moving picture files, on-line game services and multimedia services.

The various tastes of users and the expansion of mobile communication service content have resulted in great changes in the function and design of terminals. For example, it is expected that a camera lens assembly mounted on a portable terminal will contribute to the commercialization of an image communication service in addition to general photography work.

Meanwhile, folder-type terminals are in the highest demand in the portable terminal market. A general folder-type terminal includes a pair of housings rotatably coupled with each other by means of a hinge apparatus. Such hinge apparatuses are disclosed in various publications, including Korean Patent Registration No. 296,038 (US Patent No. 6,292,980, which issued on September 25, 2001), which was allowed to the present applicant.

Recently, digital multimedia broadcasting (DMB) service using such portable terminals has been commercialized. However, becasuse conventional portable terminals have designs conforming to basic functions, such as voice communication and message transmission, it is required for users to carry a separate cradle at all times in order to enjoy DMB service through a portable terminal. Additionally, the conventional portable terminal is inconvenient because the user must hold the portable terminal so that the screen of the terminal comes into the user's view.

Accordingly, a need exists for an improved hinge apparatus that facilitates viewing a screen of a portable terminal.

### SUMMARY OF THE INVENTION

Accordingly, an object of the present invention is to provide a portable terminal having a hinge apparatus that permits the screen of the portable terminal to come into view of the user, even without a separate cradle, by adjusting the opening and closing angle of the terminal.

Another object of the present invention is to provide a portable terminal having a hinge apparatus that permits the housings of the terminal to be rotated smoothly without stopping during the opening operation thereof while causing the rotation of the housings to be stopped at least one time at one or more predetermined locations during the closing operation thereof.

In accordance with an exemplary embodiment of the present invention, a portable terminal includes a first housing, and a second housing adapted to be rotated about a first hinge axis to be folded or unfolded in a direction approaching or moving away from the first housing while facing the first housing. A hinge apparatus rotatably couples the second housing to the first housing. The second housing receives a driving force that rotates the second housing in a direction approaching the first housing from the hinge apparatus in a first interval. The second housing receives a driving force that rotates the second housing in a direction moving away from the first housing to a fully opened position without stopping such that the second housing is unfolded from the first housing from the hinge apparatus in a second interval. The second housing is stopped at least one time within the second interval while being rotated toward the first housing from an open position of the second housing with respect to the first housing.

Other objects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features and advantages of the present invention will be more apparent from the following detailed description taken in conjunction with the accompanying drawings, in which:
FIG. 1 is a perspective view of a portable terminal having a hinge apparatus according to an exemplary embodiment of the present invention;
FIG. 2 is a front view of the portable terminal of FIG. 1 in which the housings are folded;
FIG. 3 is a rear view of the portable terminal of FIG. 1 in which the housings are folded;
FIG. 4 is an exploded perspective view of a hinge apparatus of the portable terminal of FIG. 1;
FIG. 5 is an assembled perspective view of the hinge apparatus of FIG. 4;
FIG. 6 are cam graphs of a hinge cam of FIG. 4;
FIG. 7 is a side elevational view of the portable terminal of FIG. 1 in which the housings are folded;
FIG. 8 is a side elevational view of the portable terminal of FIG. 1 in which a second housing is fully opened; and
FIG. 9 is a side elevational view of the portable terminal of FIG. 1 in which a second housing is opened at an angle of 120 degrees.

Throughout the drawings, the same drawing reference numerals will be understood to refer to the same elements, features, and structures.

### DETAILED DESCRIPTION OF EXEMPLARY EMBODIMENTS

Hereinafter, exemplary embodiments of the present invention are described with reference to the accompanying drawings. In the following description of the exemplary embodiments of the present invention, a detailed description of known functions and configurations incorporated herein is omitted to provide a clear and concise specification.

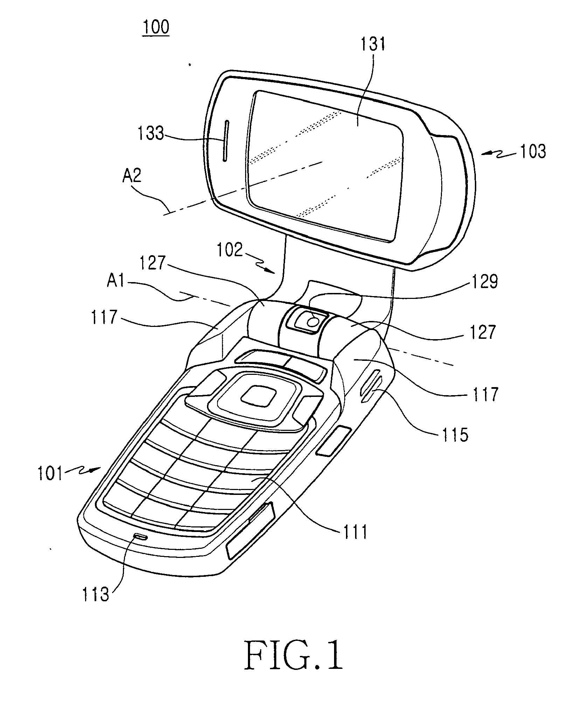

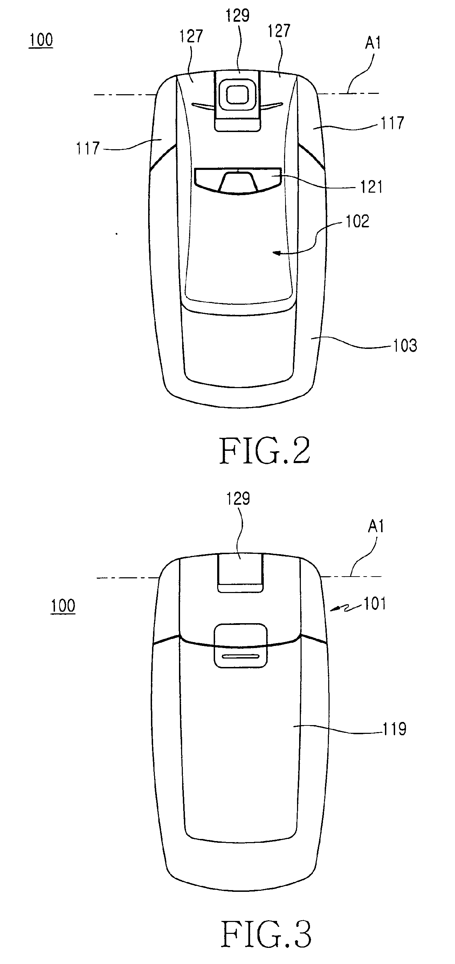

As shown in FIGs. 1 to 5, a portable terminal 100 includes a first housing 101, a second housing 102 adapted to be rotated about a first hinge axis A1 in a direction moving away from or approaching the first housing 101, and a hinge apparatus 200 for rotatably coupling the second housing 102 with the first housing 101.

Additionally, differently from the typical folder-type terminal that has a second housing provided with a display device and a receiver unit, the portable terminal 100 according to an exemplary embodiment of the present invention further includes a third housing 103 coupled with the second housing 102. A display device 131 is installed in the third housing 103. The third housing 103 is rotated about a second hinge axis A2, which extends substantially perpendicularly to the first hinge axis A1. As the second housing 102 is rotated about the first hinge axis A1, the second hinge axis A2 rotates around the first hinge axis A1.

The second housing 102 receives a driving force from the hinge apparatus 200 in the direction approaching the first housing 101 within a first interval, and receives a driving force from the hinge apparatus 200 in the direction moving away from the first housing 101 within a second interval.

The first interval represents a range between a closed position where the second housing 102 is folded on the first housing 101 and a boundary position where the second housing 102 is opened at an angle of approximately 60 degrees from the first housing 101, and the second interval represents a range between the boundary position where the second housing 102 is opened at an angle of approximately 60 degrees from the first housing 101 and a fully opened position where the second housing 102 is fully opened. The fully opened position where the second housing 102 is fully opened refers to a position where the second housing 102 is opened at an angle of approximately 153 degrees from the first housing 101.

It will be understood by those skilled in the art that the angles specified for the first and second intervals may be changed depending on products. In other words, the boundary position of the second housing 102 may not be exclusively set with an angle of 60 degrees, but may be set with an angle within a range of about 40 to 80 degrees, according to the product. Additionally, the fully opened position of the second housing 102 may not be exclusively set with an angle of approximately 153 degrees, but may be set with an angle within a range of about 150 to 180 degrees, according to the product.

When the second housing 102 is rotated in the direction moving away from the first housing 101 in the second interval, the rotation of the second housing 102 is advanced without stopping until the second housing 102 reaches the fully opened position. In contrast, when the second housing 102 is rotated in the direction approaching the first housing 101 from the fully opened position in the second interval, the rotation of the second housing 102 is stopped at least one time. The rotation mechanism of the second housing 102 is described in detail below with the construction of the hinge apparatus 200.

The first housing 101 is provided at one surface thereof with a keypad 111 and a transmitter unit 113, and is provided at the other surface thereof with a battery pack 119. Additionally, the first housing 101 is provided at both sides of an upper end portion thereof with side hinge arms 117 formed to face each other. The first housing 101 may include speaker devices 115 installed at both lateral surfaces thereof according to products. The speaker devices 115 may be installed adjacent to the side hinge arms 117.

The second housing 102 is provided at one end thereof with a center hinge arm 127, which is rotatably coupled between both side hinge arms 117. The hinge apparatus 200 is accommodated in the center hinge arm 127 while being connected to the first housing 101, which will be described in detail below with the construction of the hinge apparatus 200.

The second housing 102 functions as a connection member for connecting the third housing 103 with the first housing 101, and may be provided at an outer surface thereof with a keypad 121 including two or three keys, which are used to search for, select, or play and stop multimedia files. Also, although it is not shown, the second housing 102 is provided at an outer surface with a small display device for displaying brief information, such as time, a state of transmission and reception signals, the charge level of battery, and so forth. The center hinge arm 127 is provided at a middle portion thereof with an opening in which a camera unit 129 is installed.

As described above, the center hinge arm 127 is rotatably coupled between the side hinge arms 117, thereby forming the first hinge axis A1. Therefore, the second housing 102 is opened and closed in a direction approaching or moving away from the first housing 101, while being rotated about the first hinge axis A1.

The third housing 103 is rotatably coupled with the second housing 102 so that the third housing 103 may be rotated about the second hinge axis A2 while facing the second housing 102. The display device 131, which is installed at one surface of the third housing 103, is provided in at least one side portion thereof with another speaker device 133.

The speaker device 133 may be installed at both side portions of the display device 131 of the third housing 103, according to the type of product. When the second housing 102 has been opened and the third housing 103 rotated about the second hinge axis A2, the display device 131 is arranged in a landscape mode (in which, the horizontal length of the display device 131 is larger than the vertical length of the display device 131 when viewed by the user), and speaker devices are positioned at both sides of the display device 131. At least one of the speaker devices functions as the speaker for a receiver unit during communication.

According to an exemplary embodiment of the present invention, because speaker devices 115 are installed at both lateral surfaces of the first housing 101, the third housing 103 is provided with only one speaker device 133, which is established to function as the speaker for a receiver unit.

When the second housing 102 is folded on the first housing 101, the third housing 103 is disposed between the first housing 101 and the second housing 102, and the display device 131 faces one surface of the first housing 101. Accordingly, when the second housing 102 is folded on the first housing 101, the display device 131 becomes closed, and when the second housing 102 is unfolded from the first housing 101, the display device 131 becomes opened.

When the second housing 102 has been opened and the third housing 103 rotated about the second hinge axis A2 so that the display device 131 is positioned in the landscape mode, the user may easily watch the TV or moving picture through the display device 131. When the second housing 102 is rotated and opened at an angle of approximately 153 degrees from the first housing 101, the second housing 102 and third housing 103 sink down and make contact with a ground surface while the first housing 101 is lifted separately from the ground surface, because of the relative weight of the second housing 102.

To easily view the screen displayed through the display device 131, the first housing 101 must be maintained in contact with the ground surface while the third housing 103, including the display device 131, is spaced from the ground surface. Therefore, the rotation of the second housing 102 is preferably stopped at an angle within a range of about 90 to 120 degrees so that the thirdfirst housing 103 101 may be maintained in contact with the ground surface.

Such a mechanism is realized by the hinge apparatus 200.

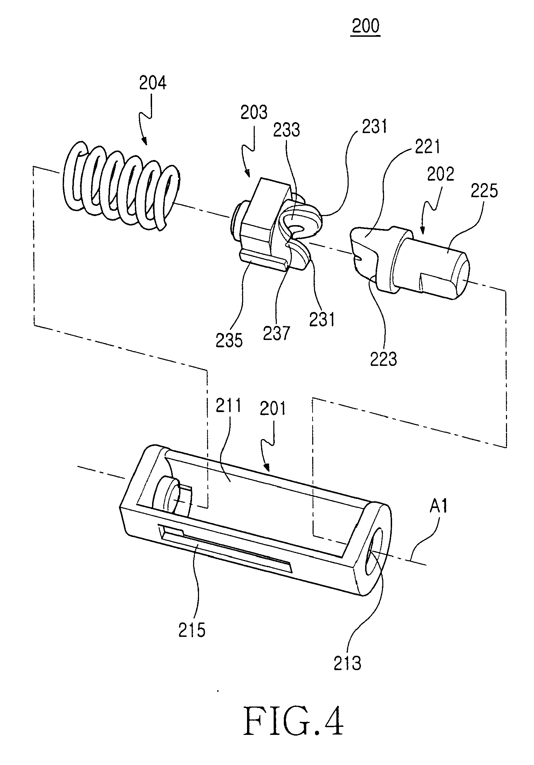

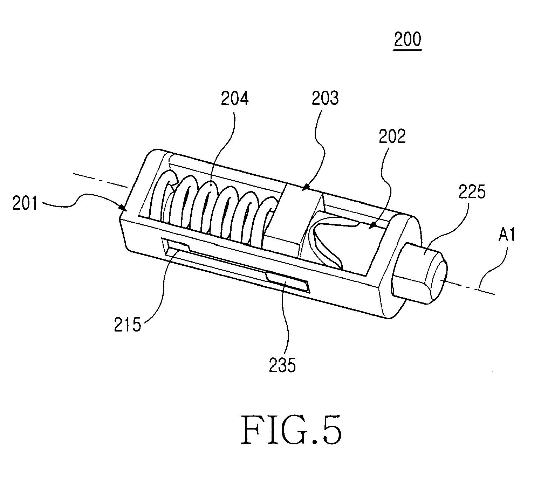

Referring to FIGs. 4 and 5, the hinge apparatus 200 includes a hinge housing 201, a hinge shaft 202, a hinge cam 203, and an elastic member 204 (such as a spring). The hinge housing 201 is fixedly received in the center hinge arm 127. The hinge shaft 202 is rotatably received in the hinge housing 201 while being connected to the first housing 101.

The hinge shaft 202, the hinge cam 203, and the elastic member 204 are sequentially received in a cavity 211 of the hinge housing 201. The hinge housing 201 is disposed at one end thereof with an opening 213 through which one portion of the hinge shaft 202 protrudes, and is provided at one sidewall thereof with a guide slot 215 that extends lengthwise.

The hinge shaft 202 is disposed at one end thereof with a pair of first mountain-shaped portions 221 and a pair of first valley-shaped portions 223, which are alternately arranged in the circumferential direction of the hinge shaft 202, and is provided at the other end thereof with a hinge protrusion 225. The hinge shaft 202 is rotatably received in the hinge housing 201, while the hinge protrusion 225 protrudes through the opening 213 out of the hinge housing 201.

The hinge apparatus 200 is received in the center hinge arm 127, and the hinge protrusion 225 is fixed to one of the side hinge arms 117. Therefore, when the second housing 102 is rotated about the first hinge axis A1, the hinge housing 201 is rotated together with the second housing 102 about the first hinge axis A1 while the hinge shaft 202 is fixedly maintained. That is, the hinge shaft 202 is rotated relative to the hinge housing 201.

The hinge cam 203 is disposed at one end thereof with a pair of second mountain-shaped portions 231 and a pair of second valley-shaped portions 233, which are alternately arranged in the circumferential direction of the hinge cam 203. A guide protrusion 235 is disposed at the other end of the hinge cam 203 corresponding to the guide hole 215. The hinge cam 203 is received in the hinge housing 201 while facing one end of the hinge shaft 202, and the hinge shaft 202 is rotated relative to the hinge cam 203 in the hinge housing 201. When the hinge shaft 202 is rotated, the first mountain-shaped portions 221 and first valley-shaped portions 223 are in sliding contact with the second mountain-shaped portions 231 and second valley-shaped portions 233, while facing the second mountain-shaped portions 231 and second valley-shaped portions 233.

The guide protrusion 235 is engaged with the guide hole 215 such that the hinge cam 203 performs only linear movement. Elastic force is applied to the hinge cam 203 from the elastic member 204, thereby biasing the hinge cam 203 toward the hinge shaft 202. Therefore, while the hinge shaft 202 is being rotated in the hinge housing 201, a driving force is generated, which rotates the hinge shaft 202 in such a direction that the first mountain-shaped portions 221 and the first valley-shaped portions 223 are engaged with the second valley-shaped portions 233 and the second mountain-shaped portions 231, respectively.

One end of the elastic member 204 is supported by the inner wall of the hinge housing 201 and the other end of the elastic member 204 is supported by the hinge cam 203, thereby providing the elastic force for biasing the hinge cam 203 toward the hinge shaft 202.

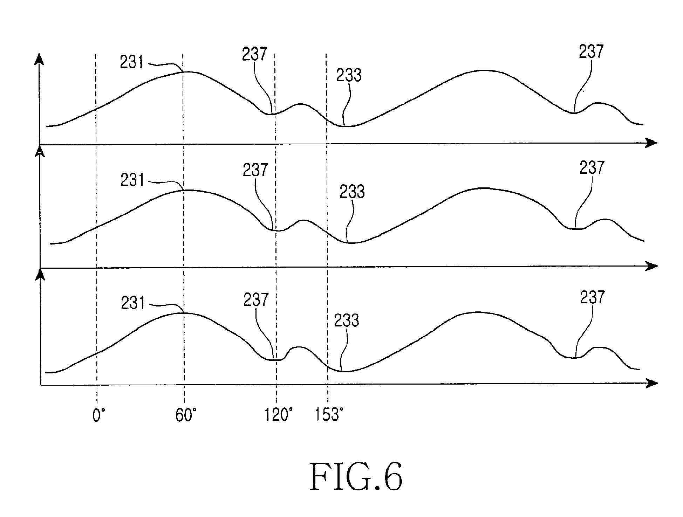

At least one latching groove 237 is formed on an inclined surface between the second mountain-shaped portion 231 and second valley-shaped portion 233 of the hinge cam 203. The cam graphs of the hinge cam 203 having the above-mentioned structure are shown in FIG. 6. FIG. 6 shows three examples of the cam graph according to the shape of the latching groove 237, in which each cam graph represents the structure of the hinge cam 203. In the cam graph shown in FIG. 6, the horizontal axis represents a rotation angle of the second housing 102 relative to the first housing 101, and the vertical axis represents a surface profile of the hinge cam 203, that is, a shape of the second mountain-shaped portions 231 and second valley-shaped portions 233.

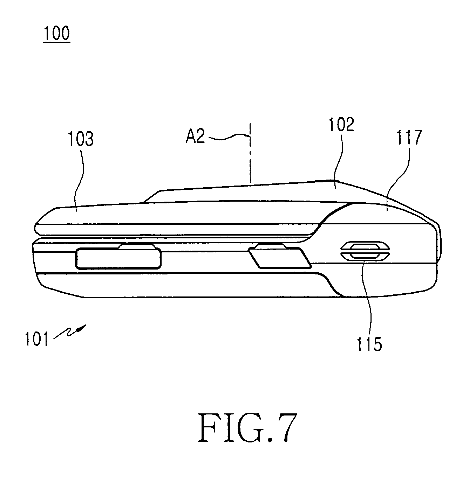

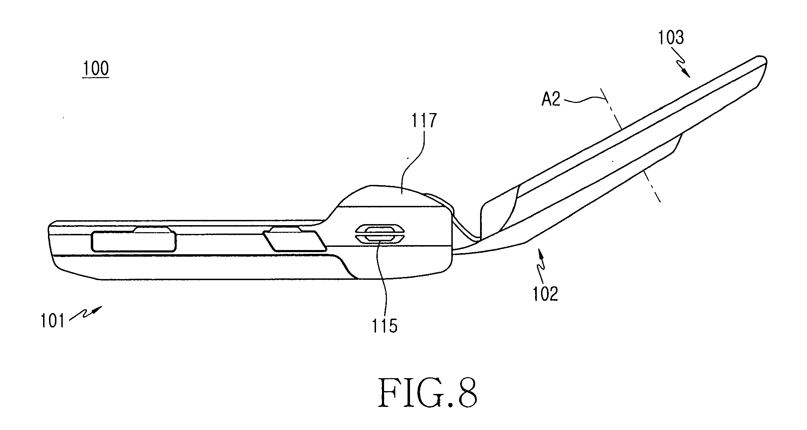

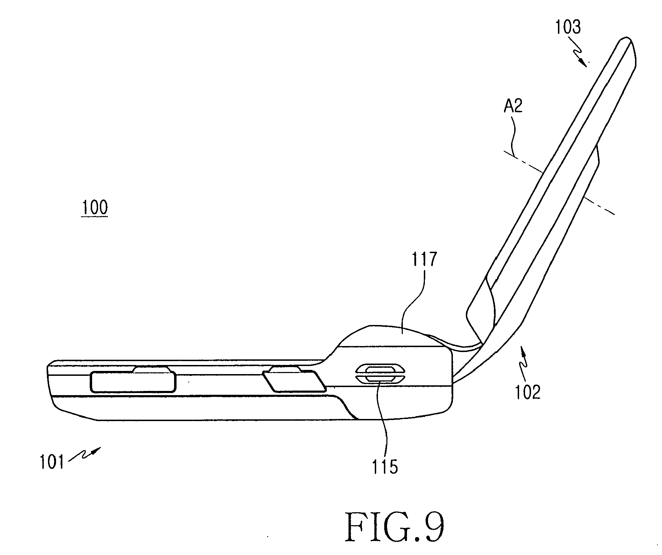

Referring further to FIGs. 7 to 9, when the angle between the first housing 101 and second housing 102 is 0 degrees, that is, when the second housing 102 is folded onto the first housing 101, the first mountain-shaped portion 221 is positioned on the inclined surface of the hinge cam 203. The first interval is established as an interval between one inclined surface of the hinge cam 203, at which the first mountain-shaped portion 221 is positioned when the second housing 102 is folded on the first housing 101, and the peak point of the second mountain-shaped portion 231. When the second housing 102 is opened at an angle of approximately 60 degrees from the first housing 101, the first mountain-shaped portion 221 reaches the peak point of the second mountain-shaped portion 231.

The latching groove 237 is positioned in the second interval. The latching groove 237 is formed at a position where the latching groove 237 is engaged with the first mountain-shaped portion 221 when the second housing 102 is opened at an angle of approximately 120 degrees from the first housing 101. Therefore, when the first mountain-shaped portion 221 is engaged with the latching groove 237 while the second housing 102 is rotated within the second interval between the 60 degrees opened position and the fully opened position relative to the first housing 101, the rotation of the second housing 102 is stopped. That is, the latching groove 237 is formed between the second mountain-shaped portion 231 and the second valley-shaped portion 233 so that the first mountain-shaped portion 221 may be engaged with the latching groove 237 only within the second interval.

The latching groove 237 and the first mountain-shaped portion 221 are engaged with each other, only when the second housing 102 is rotated in the direction approaching the first housing 101 from the fully opened position. When the first mountain-shaped portion 221 is advanced to the fully opened position (that is, the 153 degrees open position) via the latching groove 237 in the second interval, the first mountain-shaped portion 221 is advanced to the 153 degrees open position while passing through the latching groove 237 without engaging with the latching groove 237. Therefore, the second housing 102, which has been opened above 60 degrees, is rotated to the fully opened position without stopping.

This is because the sum of a driving force generated when the first mountain-shaped portion 221 is positioned between a 60 degrees rotated position of the hinge cam 203 and the latching groove 237 and a rotational inertial force of the second housing 102 is greater than a restraint force of the latching groove 237 acting to stop the movement of the first mountain-shaped portion 221. However, when the user restricts the rotation of the second housing 102 to stop the second housing 102 at the 120 degrees opened position, the restraint force of the latching groove 237 applied against the first mountain-shaped portion 221 may stop the rotation of the second housing 102.

Consequently, when the second housing 102 is rotated to be opened, the second housing 102 is advanced to the fully opened position without engagement between the first mountain-shaped portion 221 and the latching groove 237, on account of the driving force of the hinge apparatus 200 and the inertial force of the second housing 102.

In contrast, when rotating the second housing 102 in the direction approaching the first housing 101 from the fully opened position, the user directly rotates the second housing 102 in the second interval. The first mountain-shaped portion 221 is advanced from the 153 degrees open position back to the 0 degrees position, and the driving force of the hinge apparatus 200 acts in the direction of opening the second housing 102. When the first mountain-shaped portion 221 reaches the 120 degrees opened position while being advanced in the direction folding the second housing 102 on the first housing 101, the first mountain-shaped portion 221 is engaged with the latching groove 237. Although the driving force of the hinge apparatus 200 is continuously maintained, the driving force is counterbalanced by the user's force of rotating the second housing 102 in the direction approaching the first housing 101, so that the first mountain-shaped portion 221 is engaged with the latching groove 237.

Accordingly, the second housing 102 is fixedly maintained at the 120 degrees opened position relative to the first housing 101. Then, the user may arrange the display device 131 in the landscape mode by rotating the third housing 103 about the second hinge axis A2. Herein, the angle in which the rotation of the second housing 102 is stopped may be established as an angle selected between 90 degrees and 120 degrees by changing the position of the latching groove 237, as described above.

According to the hinge apparatus 200, the user may open the second housing 102 in the same manner as that of the conventional folder-type terminal when it is desired to perform the general voice communication or to transmit a text message, and the user may easily watch the TV, a moving picture, and so forth, by opening the second housing 102 by an angle between approximately 90 and 120 degrees according to necessity.

Meanwhile, the construction of the hinge apparatus 200 may be changed in various forms. For example, the hinge housing 201 may be formed integrally with the center hinge arm 117. Although the hinge housing 201 is formed integrally with the center hinge arm 117, the hinge shaft 202 must be formed in such a manner that the hinge shaft 202 may be rotated relative to the hinge housing 201 while being held in the hinge housing 201. Additionally, the hinge cam 203 must be installed in such a manner that the hinge cam 203 may be linearly moved in the second housing 102, particularly, in the center hinge arm integrally-formed with the hinge housing 201, while facing the hinge shaft 202.

The structure of the above-mentioned hinge apparatus 200 is only one exemplary embodiment of the present invention. Therefore, hinge apparatuses having various structures may be used that allow the second housing 102 to be rotated to the fully opened position without stopping while the second housing 102 is being rotated in the opening direction within the second interval, and it is also possible to stop the rotation of the second housing 102 at an angle between approximately 90 degrees and 120 degrees while the second housing 102 is being rotated in the direction approaching the first housing 101 from the fully opened position.

As describe above, according to the portable terminal having the hinge apparatus of an exemplary embodiment of the present invention, its housings are unfolded to the fully opened position in a predetermined interval while the rotation thereof is not stopped, so that the portable terminal may be used conveniently as a general folder-type terminal. Additionally, according to the portable terminal having the hinge apparatus of an exemplary embodiment of the present invention, when its housings are folded, the rotation thereof is stopped at least one time between approximately 90 degrees and 120 degrees while the rotation is advanced in a predetermined interval, so that the user may easily receive multimedia services, such as a TV program or moving picture.

While the present invention has been shown and described with reference to certain exemplary embodiments thereof, it will be understood by those skilled in the art that various changes in form and details may be made therein without departing from the spirit and scope of the invention as defined by the appended claims. Accordingly, the scope of the invention is not to be limited by the above embodiments but by the claims and the equivalents thereof.

## Claims

1. A portable terminal, comprising
a first housing;
a second housing adapted to be rotated about a first hinge axis to be folded or unfolded in a direction approaching or moving away from the first housing while facing the first housing; and
a hinge apparatus for rotatably coupling the second housing with the first housing,
wherein the second housing receives a driving force from the hinge apparatus in a first interval that rotates the second housing in a direction approaching the first housing;
the second housing receives a driving force from the hinge apparatus in a second interval that rotates the second housing in a direction moving away from the first housing to a fully opened position without stopping such that the second housing is unfolded from the first housing; and
the second housing is stopped at least one time within the second interval while being rotated toward the first housing from an opened position of the second housing with respect to the first housing.

2. The portable terminal as claimed in claim 1, wherein the hinge apparatus includes
a hinge cam installed adjacent to the second housing such that the hinge cam moves linearly;
a hinge shaft fixed to the first housing and adapted to be rotated relative to the hinge cam while facing the hinge cam;
a first mountain-shaped portion and a first valley-shaped portion that are formed at one end of the hinge shaft such that the first mountain-shaped portion and the first valley-shaped portion are alternately arranged in the circumferential direction of the hinge shaft; and
a second mountain-shaped portion and a second valley-shaped portion that are formed at one end of the hinge cam such that the second mountain-shaped portion and the second valley-shaped portion are alternately arranged in the circumferential direction of the hinge cam;
wherein the first mountain-shaped portion and the first valley-shaped portion are in sliding contact with the second mountain-shaped portion and the second valley-shaped portion as the hinge shaft is rotated.

3. The portable terminal as claimed in claim 2, wherein the hinge apparatus includes
at least one latching groove formed on an inclined surface between the second mountain-shaped portion and the second valley-shaped portion, when the second housing is rotated in the direction approaching the first housing from a fully opened position the first mountain-shaped portion is latched into the latching groove, thereby stopping the rotation of the second housing.

4. The portable terminal as claimed in claim 3, wherein
when the second housing is rotated in the direction moving away from the first housing, the first mountain-shaped portion rotates while passing the latching groove until the second housing reaches the fully opened position.

5. The portable terminal as claimed in claim 3, wherein
when the first mountain-shaped portion is latched into the latching groove, the rotation of the second housing is stopped at a position where the second housing is opened at an angle of approximately 120 degrees from the first housing.

6. The portable terminal as claimed in claim 2, wherein the hinge apparatus includes
a hinge housing; and
an elastic member supported by an inner wall of the hinge housing at one end of the hinge housing, the hinge shaft and the hinge cam being accommodated in the hinge housing and the elastic member applying an elastic force to the hinge cam to bias the hinge cam toward the hinge shaft.

7. The portable terminal as claimed in claim 1, wherein
the first interval has a range between a first position where the second housing is folded on the first housing and a second position where the second housing is opened at an angle of approximately 60 degrees from the first housing.

8. The portable terminal as claimed in claim 7, wherein
the second interval has a range between the second position where the second housing is opened at an angle of approximately 60 degrees from the first housing and a third position where the second housing is opened at an angle of approximately 153 degrees from the first housing.

9. The portable terminal as claimed in claim 1, wherein the second housing includes
a third housing adapted to be rotated about a second hinge axis extending substantially perpendicularly to the first hinge axis, the third housing being disposed between the first housing and the second housing when the second housing is folded on the first housing.

10. The portable terminal as claimed in claim 9, wherein the third housing includes
a display device that faces the first housing when the second housing is folded on the first housing.

11. The portable terminal as claimed in claim 9, wherein the third housing includes
a display device and one or more speaker devices installed on at least one side portion of the display device.

12. The portable terminal as claimed in claim 11, wherein
the speaker devices are installed at both side portions of the display device, respectively, and one of the speaker devices functions as a speaker device for a receiver unit during communication.

13. The portable terminal as claimed in claim 1, wherein
side hinge arms are disposed at both sides of one end of the first housing while facing each other; and
a center hinge arm is disposed at one end portion of the second housing to be rotatably coupled between the side hinge arms;
wherein the hinge apparatus is accommodated in the center hinge arm.

14. The portable terminal as claimed in claim 1213, wherein
speaker devices are disposed at both lateral surfaces of the first housing and located adjacent to the side hinge arms.

15. The portable terminal as claimed in claim 6, wherein
the elastic member is a spring.

16. The portable terminal as claimed in claim 6, wherein
the hinge cam has a guide protrusion received by a guide hole in the hinge housing.

17. The portable terminal as claimed in claim 16, wherein
the guide hole is substantially parallel to an axis of rotations between the first and second housings.
